# EUROPEAN PATENT APPLICATION

(11) **EP 4 542 082 A1**
(43) Date of publication of application: **23.04.2025**
(21) Application number: 23275147.9
(22) Date of filing: 17.10.2023
(51) Int. Cl.: F16H 1/28

(54) **BEARING CAP**

(71) Applicant: Goodrich Actuation Systems Limited, Wolverhampton, West Midlands WV10 7EH (GB)
(72) Inventor: TIMMS, Jack William, Wolverhampton, WV9 5 DT (GB); HARRISON, Colin Roger, Wolverhampton, WV3 7EB (GB)
(74) Representative: Dehns

(57) **Abstract**

There is provided a rotary mechanism (202) comprising an earth annulus (220a), an output annulus (230), a radially inner bearing race formed on or by one of the earth annulus and the output annulus (220a, 230), a radially outer bearing race partially formed on or by the other of the earth annulus and the output annulus (230, 220a), an opening (262a) in the other of the earth annulus and the output annulus (230, 220a), and a removable cap (100) configured to be received by the other of the earth annulus and the output annulus (230, 220a) to form a raceway (240a) with the radially inner bearing race and the radially outer bearing race and to close the opening (262a), the raceway (240a) extending circumferentially and between the earth annulus (220a) and the output annulus (230b). The earth annulus (220a) is rotatable relative to the output annulus (230). A plurality of bearings (250) is received in the raceway (240a). The plurality of bearings (250) is insertable into and/or removable from the raceway (240a) via the opening (262a) when the removable cap (100) is removed. The removable cap (100) is configured to be radially retained by an annular component extending at least partially around the other of the earth annulus and the output annulus (230, 220a).

## Description

### TECHNICAL FIELD

The following description relates to rotary mechanisms such as rotary actuators, gears and gear stages.

### BACKGROUND

Modern aircraft include a number of movable surfaces or panels such as flight control surfaces that are configured to be movable relative to another part of the aircraft e.g. to another, fixed or stationary part of a wing. The movable parts can be moved relative to the stationary part by means of a rotary mechanism, for example an actuator or gear mechanism.

In applications where it is important to minimise weight and size of parts on an aircraft, rotary actuators are used comprising a fixed stator part and a movable rotor part. Rotary geared actuators (RGAs) have been developed in which the input and the output are linked by a series of gears to step down high speed, low torque rotation to provide slower speed, high torque positioning of a movable part. These actuators are typically positioned along the hinge line between a stationary part of the structure e.g. a wing, and a relatively rotatable part.

Bearings can be provided between the fixed stator part and the movable rotor part of such rotary mechanisms. Through continued use in such dynamic environments, bearings may become worn or otherwise, thereby no longer being able to perform their function effectively. It is therefore desirable to provide access to the bearings within such rotary mechanisms so that they can be replaced when necessary. The present disclosure seeks to provide means for providing improved installation of such bearings into an assembly of a rotary mechanism whilst reducing the overall size and weight of the closure area of the actuator assembly and the envelope required to accommodate the assembly. Where space and weight allowance is limited, such as in aircraft, there is a particular desire to reduce the size and weight of such rotary mechanisms (for example rotary actuators of the type described above).

### SUMMARY OF THE INVENTION

According to a first aspect of the disclosure, there is provided a rotary mechanism. The rotary mechanism comprises an earth annulus, an output annulus, a radially inner bearing race formed on or by one of the earth annulus and the output annulus, a radially outer bearing race partially formed on or by the other of the earth annulus and the output annulus, an opening in the other of the earth annulus and the output annulus, and a removable cap configured to be received by the other of the earth annulus and the output annulus to form a raceway with the radially inner bearing race and the radially outer bearing race and to close the opening, the raceway extending circumferentially and between the earth annulus and the output annulus. The earth annulus is rotatable relative to the output annulus. A plurality of bearings is received in the raceway. The plurality of bearings is insertable into and/or removable from the raceway via the opening when the removable cap is removed. The removable cap is configured to be radially retained by an annular component extending at least partially around the other of the earth annulus and the output annulus.

In some examples, the other of the earth annulus and the output annulus comprises a recess extending radially inwardly from a radially outer surface thereof, and wherein the recess is configured to receive the removable cap.

In some examples, the rotary mechanism comprises a removable connector connecting the removable cap to the other of the earth annulus and the output annulus.

In some examples, the removable cap comprises a cap bearing race, and when the removable cap is received by the other of the earth annulus and the output annulus, the cap bearing race, the radially inner bearing race and the radially outer bearing race form the raceway, wherein optionally when the removable cap is received by the other of the earth annulus and the output annulus, the cap bearing race, the radially inner bearing race and the radially outer bearing race form a fully closed raceway.

In some examples, when the removable cap is received by the other of the earth annulus and the output annulus, the raceway extends continuously.

In some examples, the other of the earth annulus and output annulus comprises radially outwardly extending locking members configured to engage with complementary radially inwardly extending locking features provided on the annular component.

In some examples, the rotary mechanism comprises one or more further earth annuli axially spaced from the earth annulus, and/or comprising one or more further output annuli axially spaced from the output annulus.

In some examples, the rotary mechanism is one of a rotary actuator, a gear or a gear stage.

According to another aspect of the disclosure, there is provided a rotary mechanism assembly. The rotary mechanism comprises the rotary mechanism of any of the above examples. The rotary mechanism comprisesan annular component extending at least partially around the other of the earth annulus and the output annulus and configured to radially retain the removable cap when the removable cap is received by the other of the earth annulus and the output annulus.

In some examples, when the removable cap is received by the other of the earth annulus and the output annulus and the annular component is in-situ, the annular component overlaps the removable cap, wherein, optionally, the annular component fully overlays the removable cap when the removable cap is received by the other of the earth annulus and the output annulus and the annular component is in situ.

In some examples, when the removable cap is received by the other of the earth annulus and the output annulus and the annular component is in-situ, the annular component retains the removable cap in place, wherein, optionally, the annular component is in contact with the removable cap when the removable cap is received by the other of the earth annulus and the output annulus and the annular component is in situ.

In some examples, the annular component comprises radially inwardly extending locking features which engage with radially outwardly extending locking features provided on the other of the earth annulus and output annulus, and wherein the radially inwardly extending locking features are configured to radially retain the removable cap.

In some examples, when the removable cap is received by the other of the earth annulus and the output annulus, the removable cap is radially inboard of at least the radially outer ends of the radially outwardly extending locking features.

In any example of the disclosure, the earth annulus may be coaxial with the output annulus. In any example in which a plurality of earth annuli and / or a plurality of output annuli are provided, all of the earth annuli may be coaxial with each other, and / or all of the output annuli may be coaxial with each other, and / or all of the earth annuli may be coaxial with all of the output annuli.

In any example of the disclosure, the other of the earth annulus and the output annulus is the output annulus or the other of the earth annulus and the output annulus is the earth annulus.

According to another aspect of the disclosure, there is provided a method for assembling the rotary mechanism assembly of any of the above examples. The method comprises closing the opening with the removable cap, and installing the annular component on the other of the earth annulus and the output annulus to radially retain the removeable cap.

In some examples, the step of installing the annular component on the other of the earth annulus and the output annulus comprises sliding the annular component onto the other of the earth annulus and the output annulus.

### BRIEF DESCRIPTION OF THE DRAWINGS

Certain examples of the disclosure will now be described by way of example only and with reference to the accompanying drawings in which:
Figure 1 is a schematic perspective view of a partially disassembled rotary actuator assembly including a rotary actuator;
Figure 2 is a schematic perspective view of the rotary actuator assembly of Figure 1 when assembled;
Figure 3 shows schematic perspective front and back views of a removable bearing cap;
Figure 4 is a schematic perspective view of a rotary actuator with the removable bearing cap removed;
Figure 5 is a schematic cross-sectional view of the rotary actuator assembly of Figure 2 taken along plane A-A in Figure 2;
Figure 6 is a schematic enlarged view of a part of Figure 5;
Figure 7 is a schematic cross-sectional view of the rotary actuator assembly of Figure 2 taken along line B-B in Figure 5;
Figure 8 is a schematic enlarged view of a part of Figure 7;
Figure 9 is a schematic side view of part of an example rotary actuator assembly; and
Figure 10 is a schematic side view of part of another example of a rotary actuator assembly.

### DETAILED DESCRIPTION

The following description is made with reference to a rotary actuator (either an electric or hydraulic rotary actuator). However, it is to be understood that the following disclosure also applies to rotary mechanisms in general including other rotary mechanisms such as one or more gears and/or one or more gear stages, hydraulic motors and / or strain wave gear boxes.

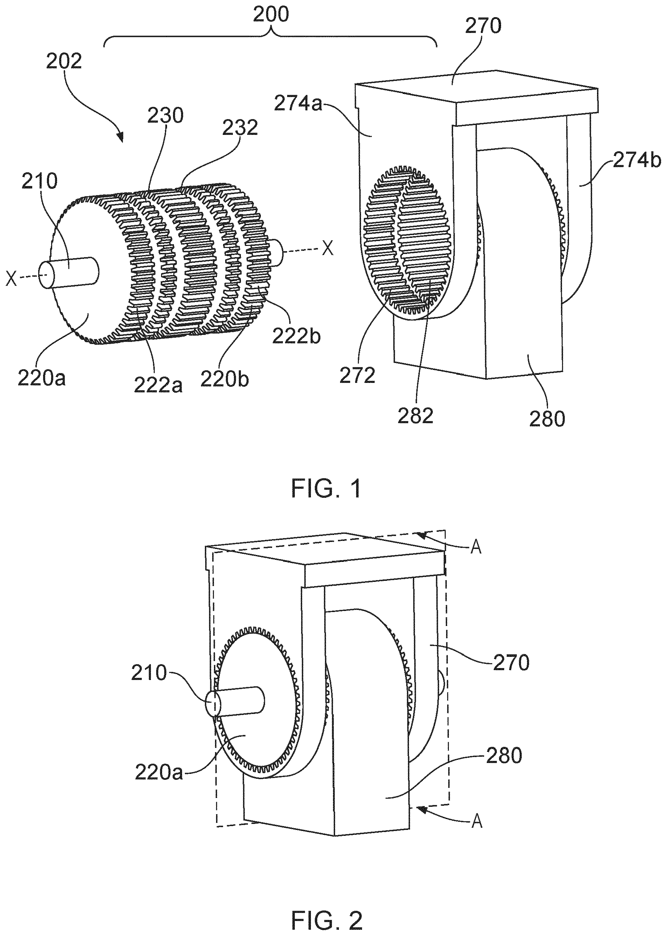

With reference to Figure 1, a disassembled rotary mechanism assembly, in this example a rotary actuator assembly 200, according to an example of the disclosure is shown. The rotary mechanism assembly includes a rotary mechanism, in this example a rotary actuator 202. It will be understood that, in the disassembled state, the rotary actuator 202 of the rotary actuator assembly 200 is not installed into its mounting 270. The rotary actuator 202 can be any known type of rotary actuator, for example having a stator part and a rotor part. Input rotation is provided to the rotary actuator 202 by any suitable drive means such as a motor (not shown) that drives an input 210. In some examples the input 210 may be an input shaft. The rotary actuator 202 may extend along an axis X-X defined by the input shaft. In the present example, the rotary actuator 202 comprises a first earth annulus 220a and an axially spaced second earth annulus 220b. In other examples, the rotary actuator 202 may comprise only one earth annulus or more than two earth annuli. The number of earth annuli can be selected according to the use and design requirements of the actuator. Throughout the description reference may be made to two earth annuli. However, the corresponding descriptions also apply to a rotary actuator with one or more earth annuli.

In the present example, the rotary actuator 202 also comprises an output annulus 230. In some examples, the rotary actuator 202 may comprise one or more output annuli. The number of output annuli can be selected according to the use and design requirements of the actuator. Throughout the description reference may be made to one output annulus. However, the corresponding descriptions also apply to a rotary actuator with one or more output annuli.

It will be understood that the one or more earth annuli 220a, 220b may be configured to be fixed to a first component (such as the earth structure 270 described below which may for example be a vehicle static structure such as a wing) and the one or more output annuli may be configured to be fixed to a second component (such as the output structure 280 described below which may for example be a panel such as a slat or aileron) which is moveable relative to the first component such that rotation of the one or more output annuli relative to the one or more earth annuli drives movement of the second component relative to the first component. Although useful in many different applications, in one example, the first component may be an aircraft wing (not shown) and the second component may be a flap (not shown) for controlling aircraft movement. It will be understood that, in any example of the disclosure, the one or more earth annuli of the rotary mechanism are configured to rotate relative to the one or more output annuli. It is to be understood that, in any example of the disclosure, any of the one or more earth annuli may be configured to rotate relative to any of the one or more output annuli. Bearings are provided in the rotary mechanism to support this rotation. The bearings may be ball bearings, needle bearings, tapered bearings, roller bearings or any other suitable type of bearing. The bearings may be received in a bearing race as will be described in further detail below.

In any example, the rotary actuator 202 may be provided with gears (not shown in detail) such that the output annulus 230 rotates in response to, but at a different speed to the input 210 rotation.

In any example, the output annulus 230, the one or more earth annuli 220a, 220b and the gears may be arranged around the axis X-X such that the output annulus 230 rotates about the axis X-X.

In operation, rotation of input 210 causes the gearing (not shown) to rotate, which in turn causes rotation of the output annulus 230. With a rotary actuator 202, as shown, the gears of the actuator operate such that the output annulus 230 rotates in response to, but at a different speed to the input 210 rotation. In any example, the one or more earth annuli 220a, 220b and one or more output annuli 230 may be concentric.

The gearing allows the relative rotation speed between the earth annulus 220a and the output annulus 230 to differ to the rotation speed of input shaft. Therefore, by driving the input shaft, and fixing the earth annulus 220a (as will be described further below), the output annulus 230 and output structure 280 may be driven to rotate.

In some examples, the rotary actuator assembly 200 may comprise an earth structure coupled to the one or more earth annuli. As shown in Figure 1, the rotary actuator assembly comprises an earth structure 270 that couples to the first earth annulus 220a and second earth annulus 220b. In some examples, the earth structure 270 comprises radially inwardly extending locking features. In some examples, these locking features are splines. In some examples, the radially inwardly extending locking features engage with complementary radially outward extending locking features extending from the circumference of the one or more earth annuli. In some examples, these locking features are splines. In the present example, the earth structure 270 comprises two sleeve members 274a, 274b, which at least in some examples may be axially spaced from and /or axially aligned with each other. The two sleeve members 274a, 274b may be fixed relative to each other. Each sleeve member 274a, 274b forms a circular opening, in which splines 272 are located. The splines 272 of the respective sleeve members 274a, 274b may engage with radially outward extending splines 222a, 222b on the first earth annulus 220a and second earth annulus 220b when the rotary actuator assembly 200 is assembled such that the earth structure 270 and first earth annulus 220a and second earth annulus 220b are fixed relative to each other.

In some examples, the rotary actuator assembly comprises an output structure configured to couple to the output annulus. In any example of the disclosure, the output structure can be an annular component configured to be slid onto or over at least one of the earth annuli or output annuli of the rotary actuator. In some examples, the output structure comprises radially inwardly extending locking features. In some examples, these locking features are splines. In some examples, the radially inwardly extending locking features engage with complementary radially outward extending locking features extending from the circumference of the output annulus. In some examples, these locking features are splines. In the present example, the rotary actuator assembly comprises an output structure 280 configured to be positioned between the pair of sleeve members 274a, 274b of the earth structure 270. The output structure 280 comprises an opening in which splines 282 are located and which may engage with radially outward extending splines 232 on the output annulus 230 such that the output structure 280 and output annulus 230 are fixed relative to each other. Both the first earth annulus 220a, the second earth annulus 220b and the output annulus 230 are configured to be insertable through the sleeve openings of the earth and output structures 270, 280. An assembled rotary actuator assembly 200 in which the first earth annulus 220a, the second earth annulus 220b and the output annulus 230 extend through the sleeve openings of the earth and output structures 270, 280 is shown in Figure 2. In some examples, the opening of the earth structure and/or the output structure may be partially annular. That is, the opening may not complete a full circle.

In some examples, there may be more than one output annulus. Although the first earth annulus 220a and second earth annulus 220b are shown either side of the output annulus 230, this would not be the case if only one earth annulus were present. In some examples, a second or more output annuli may bound an earth annulus with the output annulus 230.

In some examples, the locking features may be omitted from the abovementioned components. Instead, the earth structure 270 and output structure 280 may comprise other securing means. For example, the earth structure 270 and output structure 280 may be configured to tighten around the respective earth and output annuli, for example, by implementing a hose clip-like mechanism. These mechanisms typically comprise a band configured to encircle a component, for example the earth annulus or output annulus, and an adjustment mechanism configured to tighten the band around the component, when the adjustment mechanism is adjusted. Example hose clip-like mechanisms include hose clips, jubilee clips, T-bolt clamps, and ear clamps.

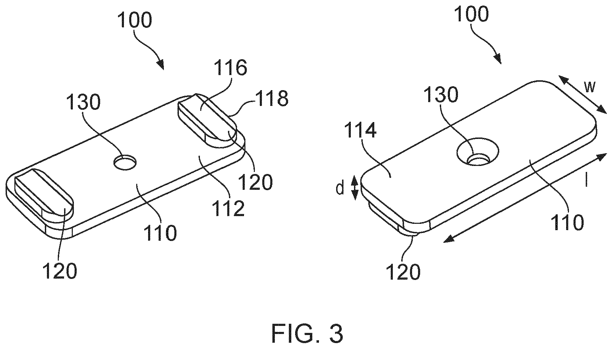

Although not seen in Figures 1 and 2, any rotary mechanism according to the disclosure includes a removable cap. Figure 3 shows a front and back view of a removable cap 100 (in this example having duplex ball bearing raceways) according to an example of the disclosure. Although it could take many different forms, in the present example, the removable cap 100 comprises a plate 110. The plate 110 has a length I, a width w and a depth d. In the example of Figure 3, the plate 110 is shown as elongate, such that the length I thereof is greater than the width w. In other examples, the plate 110 may not be elongate, but may instead take any shape. For example, the plate 110 may be square, circular, oval, triangular, or any other n-sided shape. The plate 110 may be formed from a hard-wearing material such as steel or ceramic.

In some examples, the removable cap 100 comprises a cap bearing race 120. In any example, the cap bearing race 120 can include a track 116, to guide the movement of one or more ball bearings along the track. In any example, the track 116 can be formed by a groove and can take any suitable form, for example being hemispherical or partially spherical in cross section. In any example, the track 116 could be formed directly in the plate 110. In the present example, a pair of cap bearings races 120 is provided. In some examples, the removable cap 100 may comprise a single cap bearing race. In some examples, the removable cap 100 may comprise a plurality, for example, more than two, cap bearing races 120. Whilst reference is made hereinafter to cap bearing races 120, it is to be understood that the following is applicable to a removable cap 100 having one or more cap bearing races 120.

In some examples and as shown in Figure 3, the cap bearing races 120 are located on a first face 112 of the plate 110. The first face 112 may be referred to as the inner face 112. The plate comprises a second face 114 opposite the first face. The second face 114 may be referred to as the outer face 114. That is, the side of the plate opposite the cap bearing races 120.

In some examples, the cap bearing races 120 may be located on the plate 110, so as to upstand from the plate 110, in particular, the inner face 112. In some examples, the cap bearing races 120 may fully protrude from the plate 110. That is, no part of the cap bearing races 120 lies beneath a surface of the inner face 112. In the present example, the cap bearing races 120 do not fully extend across the width of the plate 100. In some examples, the cap bearing races 120 may extend across the entire width of the plate 110. In some examples, each cap bearing race 120 may comprise an upstand 118 located on the plate 110 and in which the track 116 is formed.

In some examples, the cap bearing races 120 may partially protrude from the plate 110. That is, part of the cap bearing races 120 lies beneath a surface of the first face 112. In some examples, the cap bearing race 120 may be configured such that the track 116 lies at least partially beneath a surface of the first face 112. In some examples, the cap bearing races 120 may not fully extend across the width of the plate 100. In some examples, the cap bearing races 120 may extend across the entire width of the plate 110.

In the present example, the cap bearing races 120 and the plate 110 are integral with each other. In some examples, the cap bearing races 120 may be separate components and may be attached to the plate 110, for example by welding or adhesive. In some examples, the cap bearing races 120 and plate 110 may be formed from the same material or from different materials.

In some examples, the cap bearing races 120 may be defined by grooves formed in the plate 110. In some examples, the cap bearing races 120 may not fully extend across the width of the plate 100. In some examples, the cap bearing races 120 may extend across the entire width of the plate 110.

As will be explained in more detail below, the inner face 112, the outer face 114 and/or the cap bearing races 120 may be curved so as to complement an outer surface of part of the rotary actuator 202.

In some examples, the removable cap 100 is couplable to the rotary actuator 202, in particular to one of the one or more earth annuli or the output annulus. This is discussed in more detail below. In the present example, the removable cap 100 comprises a hole 130 through the plate 110, through which a removable connector (not shown in Figure 3), for example fastening means, may be received. In some examples, there may be a plurality of holes to receive connectors or fastening means. As will be explained in more detail below, the removable cap 100 is removably attachable to the rotary actuator 202 via the connector. The connector or connectors may be a screw or screws. In other examples, the connector may be a snap-fit mechanism, a bayonet mount, and/or any other suitable fastening means. In some examples, the hole 130 may be omitted with the removable cap 100 comprising another connector, for example, snap-fit mechanisms and/or magnets. In some examples, these may be integral with the removable cap 100. In any example of the disclosure, the removable connector may be used to hold the removable cap 100 in position in the rotary actuator before the rotary mechanism is fully assembled. At least in some examples, the removable connector may be removed from the removable cap 100 before the rotary actuator is installed, for example into an aircraft. It will be understood therefore that the removable connector may hold the removable cap 100 in position in the rotary actuator for example during transportation and prior to it being installed in its intended use position.

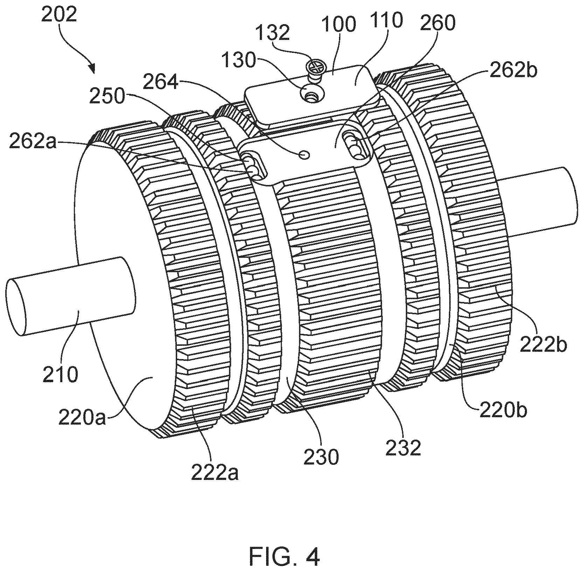

Figure 4 shows a rotary actuator 202 according to an example of the disclosure together with the removable cap 100 of Figure 3 when disassembled. The rotary actuator 202 is similar to that shown and described in relation to Figures 1 and 2, and therefore only those features not visible in Figures 1 and 2 and previously described are explained hereinafter. As described, the rotary actuator 202 comprises an output annulus 230. The output annulus 230 comprises a recess 260 which extends radially inwardly from the radially outer surface thereof. The recess 260 is configured to receive the removable cap 100. As will be explained in more detail below, in some examples, the recess 260 may be configured such that when the removable cap 100 is in-situ in the rotary actuator 202, that is, when the removable cap is received by the output annulus and/or when the removable cap 100 is located within the recess, the removable cap 100 does not protrude outwardly from the recess 260. That is, the radially outer face 114 of the removable cap 100 does not radially extend beyond the outer surface of the output annulus 230. In some examples, the removable cap 100 may protrude from the recess. In some examples, the recess may not be present.

Although the example shown in the Figures provides the recess in the output annulus, it will be understood that in some examples, one or more of the first earth annulus 220a and second earth annulus 220b may comprise the recess or recesses. It is to be understood that the following description is equally applicable to such examples.

As explained above, the removable cap 100 may be removably coupled to the one or more earth annuli or output annulus. In the present example, the removable cap 100 comprises a hole for receiving a screw 132 for removably attaching the removable cap 100 to the output annulus 230. The recess comprises a threaded hole 264 for receiving the screw 132. With the removable cap 100 in-situ, that is, the removable cap 100 is received by the recess, the screw 132 may tightened to secure the removable cap 100 to the output annulus 230. As explained above, other fastening means may be envisaged that enable the removable cap 100 to be removably attached to the output annulus 230. In such examples, the recess 260 may comprise corresponding means that work with the other fastening means. For example, the removable cap 100 and recess 260 may comprises opposing magnetic members, respectively. Alternatively, or additionally, the removable cap 100 and recess 260 may comprise opposing components of a snap-fit mechanism, respectively. As will be explained in more detail below, the fastening means, for example the screw 132, are primarily used for radially retaining the removable cap 100 in place during transportation of the rotary mechanism and/or before the rotary mechanism is inserted into the rotary mechanism assembly and the output structure 280 is in place. As described above, once the rotary mechanism assembly is assembled, the output structure 280 may act to radially retain the removable cap 100 within the rotary mechanism.

The recess 260 comprises a recess floor with which the removable cap 100 may be in contact, when in-situ. In some examples, one or more openings may extend through one of the earth annuli or output annulus from a radially outer surface thereof. In some examples, the recess 260 may comprise one or more openings. In the present example, the recess 260 comprises a pair of openings 262a, 262b, hereinafter referred to as the openings 262a, 262b. It is to be understood that only a single opening may be present, and the following description equally applies to such an arrangement. The openings 262a, 262b are configured to provide access to bearings 250 located between the one of the earth annuli and the output annulus when the removable cap 100 is not in-situ. That is, when the removable cap 100 does not close the openings. Such an arrangement is shown in Figure 4 and is discussed in more detail below. As explained above, accessibility to the bearings 250 is an important consideration since bearings 250 may become worn during use. In any of the described examples, bearings may easily be removed from and / or inserted into the rotary actuator 202.

The openings 262a, 262b are shown as elongate slots, in particular, elongate in the circumferential direction. It is to be understood that the openings 262a, 262b may be configured such that access may be provided to any type of bearing used. For example, the openings 262a, 262b may be configured such that access may be provided to needle bearings, tapered bearings, roller bearings or any other type of bearing.

In the present example, the recess 260 and openings 262a, 262b are configured to receive the removable cap 100. That is, in the present example, the recess 260 is configured to receive the plate 110 and the openings 262a, 262b are configured to receive the cap bearing races 120 (not shown). Put another way, recess 260 and openings 262a, 262b complement the shape of the removable cap 100. In some examples, the removeable cap 100 is configured so as to lie flush with the outer surface of the earth annulus or output anulus in which it is received. In the present example, at least the outer face 114 of the removable cap 100 is curved to match the curvature of the radially outer surface of the output annulus 230. It is to be understood that in the examples where the recess is located in an earth annulus, the removable cap may be curved to match the curvature of the radially outer surface of the respective earth annulus.

In the present example, the removable cap 100 has two bearing races 120 which are configured to be insertable into the pair of openings 262a, 262b. However, it is to be understood that a pair of removable caps each with a single bearing race may be configured to be received within the recess and perform the same function as the removable cap 100 shown in Figure 4. In such an example, each removable cap may have respective fastening means. In examples where the first and/or second earth annuli 220a, 220b comprise a recess, each may receive a removable cap 100.

As explained above, only a single opening may be provided, in which case a removable cap may comprise a single bearing race.

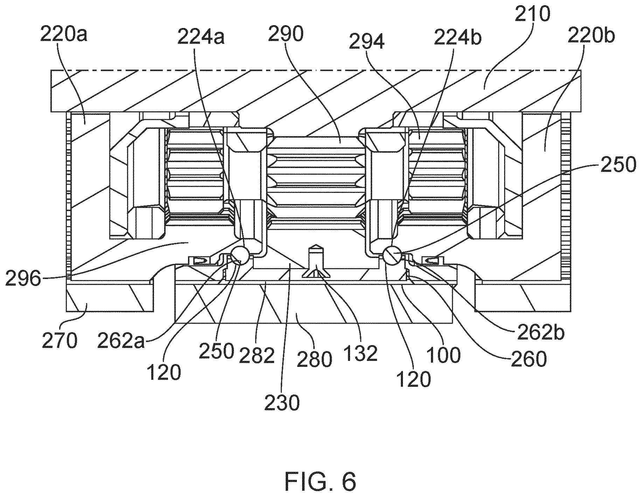

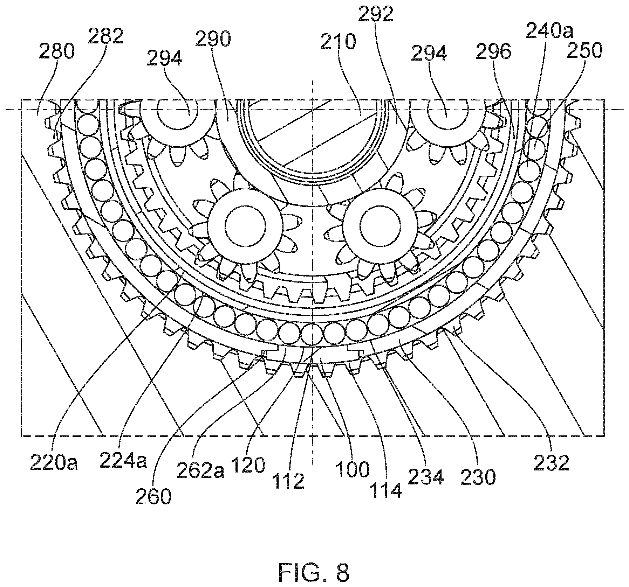

As explained above, the removable cap 100 is configured such that when the removable cap 100 is in-situ, it does not protrude beyond the radially outer surface of the output annulus 230. This may be more clearly seen in Figures 6 and 8. In the present example, the output annulus comprises splines 232 for engaging with the outer structure 280 as, for example, shown in Figures 1 and 2, and explained above. In the present example, and as is shown in, for example, Figure 8, when the removable cap 100 is in-situ the removable cap 100 entirely lies radially inboard of the exterior splines 232. That is, the teeth of splines 232 extend radially outward beyond the outer face 114 of the removable cap 100. In some examples, the removable cap 100 may comprise splines on its outer face 114 such that when the removable cap 100 is in-situ, a continuous ring of splines is formed around the outer circumference of the radially outer component 232. The splines on the removable cap may engage with interior splines 282. The relationship between the cap bearing races 120 and the interior of the rotary actuator 200 is discussed in more detail below.

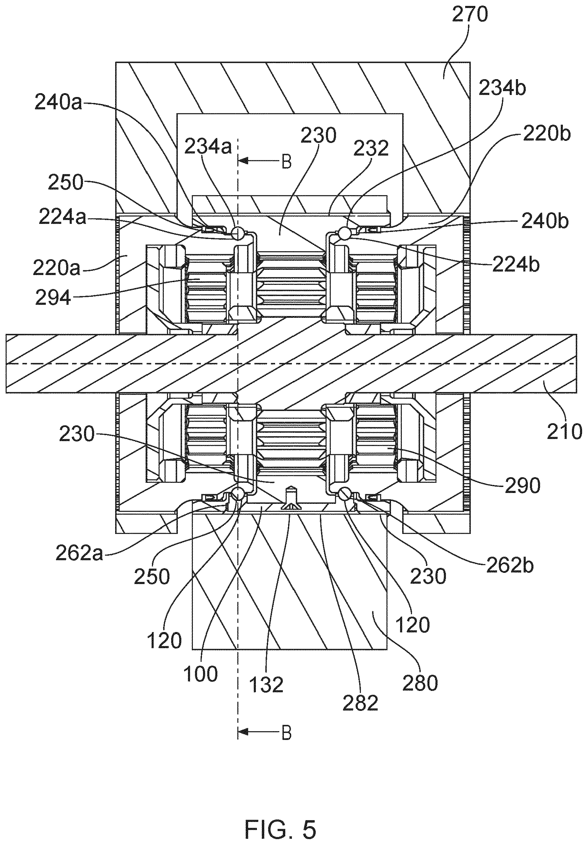

As shown in Figure 5, the first earth annulus 220a and second earth annulus 220b comprise respective first and second earth bearing races 224a, 224b. The output annulus 230 comprises a first output bearing race 234a and a second output bearing race 234b. In this example, the earth bearing races 224a, 224b are radially inwards from the output bearing races 234a, 234b. The first earth bearing race 224a and first output bearing race 234a form a first raceway 240a which extends circumferentially between the first earth annulus 220a and the output annulus 230. The second earth bearing race 224b and second output bearing race 234a form a second raceway 240b which extends circumferentially between the first earth annulus 220b and the output annulus 230. The first earth bearing race 224a and first output bearing race 234a may be axially aligned. The second earth bearing race 224b and second output bearing race 234a may be axially aligned. The first and second earth bearing races 224a, 224b and the first and second output bearing races 234a, 234b are formed by grooves in their respective annuli. In some examples, the first earth bearing races 224a and/or second earth bearing races 224b and/or first output bearing races 234a and/or second output bearing races 234b may protrude from their respective annuli. That is, the bearings race may be formed on or by their respective annuli. In such examples, the protrusions may or may not be integral with the respective annuli. A plurality of bearings 250 are received in the first and second raceways 240a, 240b. The plurality of bearings 250 may comprise any suitable number of bearings, typically more than 4, optionally between 50 and 200. However, it is to be understood that the number of bearings will be determined by the size of the bearings, and a suitable quantity is chosen so as to make a full complement. That is, to minimize the circumferential space without a bearing and / or to maximize the number of bearings possible within the raceway or raceways. It is to be understood that in some examples the earth bearing races may be radially outboard from the output bearing races. In such examples, the earth bearing races face radially inwards and the output bearing races face radially outwards.

In some examples, the one or more openings may extend through the one of the earth annuli or output annulus from a radially outer surface thereof to the raceway or raceways. In such examples, the earth bearing races are radially outboard from the output bearings races. In the present example, the openings 262a, 262b extend through the output annulus from a radially outer surface thereof to respective raceways 240a, 240b.

With reference to Figure 5, a schematic cross-sectional view of the rotary actuator assembly of Figure 2 taken along plane A-A is shown. A close-up of a portion of the section of Figure 5 is shown in Figure 6. The relationship between the removable cap 100, the first earth annulus 220a, the second earth annulus 220b, the output annulus 230 and the output structure 280 is now described with reference to Figures 5 and 6.

The removable cap 100 is shown in this example as located in-situ in the recess 260 and is secured in place with screw 132. The cap bearing races 120 are positioned in the openings 262a, 262b. The removable cap 100 lies flush with the output annulus 230. As explained above, in such an example, the removable cap 100 does not radially extend beyond the radially outer surface of the output annulus 230. The output structure 280 surrounds the output annulus 230, as also shown in Figure 2. By providing a removable cap 100 according to any of the examples described above, the removable cap 100 does not interfere with the outer structure 280 being removed from and/or coupled to the output annulus. That is, the low radial profile of the removable cap 100 allows the output structure 280 to be easily placed in-situ on and/or removed from the rotary actuator 202, for example by being slid axially over it, without the need to remove the removable cap 100. As more clearly shown in Figures 1 and 2, in some examples the output structure 280 comprises interior splines 282 configured to engage with exterior splines 232 on the output annulus 230. That is, to allow the output structure 280 to fixedly rotate with the output annulus 230. The output structure 280 may be configured to slide onto the output annulus 230, and in doing so, a part thereof slides over the removable cap 100. As shown in Figures 5 and 6 the interior splines 282 of the output structure 200 are in contact with the outer face 114 of the removable cap 100. By providing such an arrangement, the removable cap 100 is radially retained within the recess by both the fastening means, for example the screw 132, and the output structure 280, in particular, the radially inwardly extending locking features, for example splines, contacting the removable cap 100. As explained above, the fastening means, for example the screw 132, are primarily used during transportation of the rotary mechanism and/or before the output structure 280 is placed in-situ on the rotary mechanism. Once the output structure 280 is placed in-situ on the rotary mechanism, the primary load path in use is directly through to the output structure 280. That is, removable cap 100 is primarily radially retained in-situ by the output structure 280, for example by the radially inwardly extending locking features contacting the removable cap 100, thereby preventing bearings escaping from the raceway or raceways. In some examples, the output structure will overlap, optionally, fully overlay, the in-situ removable cap when the output structure is in-situ. In any example, the output structure may be coupled to the output annulus or to the earth annulus when in situ. In some examples, the fastening means may be removed prior to coupling the output structure 280 to the output annulus 230. In the present example, the output structure 280 overlays the removable cap 100. That is, the output structure 280 completely covers the removable cap 100. In some examples the output structure 280 may partially overlap the removable cap 100. In examples where the removable cap is positionable on one or more of the earth annuli, the earth structure may overlay or partially overlap the removable cap. In examples where the one or earth annuli is configured to receive the removable cap 100, the earth structure 270 is configured to overlay, or overlap, the removable cap 100, when the earth structure is in-situ and/or coupled to the one or more earth annuli.

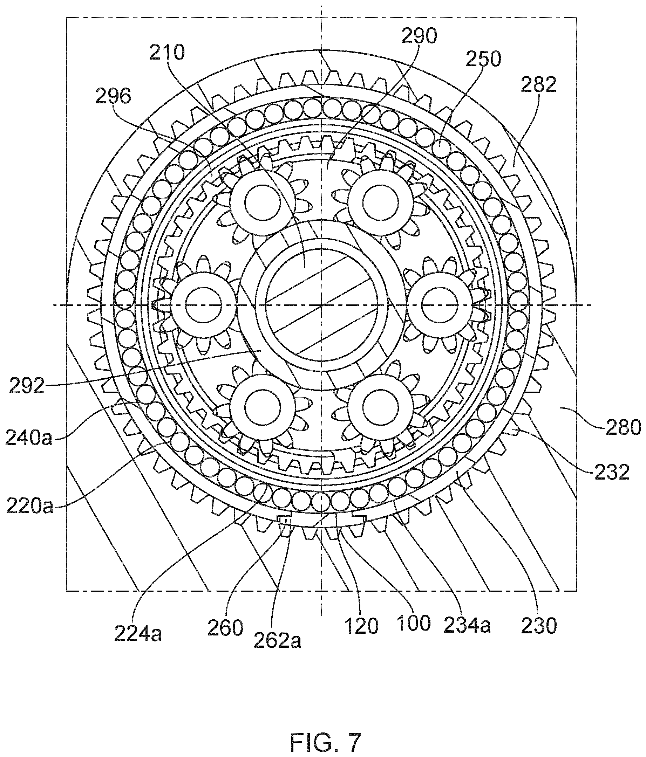

Figure 7 is a schematic cross-sectional view of the actuator assembly of Figure 5 taken along line B-B. Figure 8 shows a close-up part of what is shown in Figure 7. In this regard, the first raceway 240a is more clearly seen. The following description is equally applicable to the second earth annulus 200a and components thereof. In the present example, the first earth bearing race 224a extends continuously circumferentially around the radially outer surface of the first earth annulus 220a. The first output bearing race 234a extends circumferentially partially around the radially inner surface of the output annulus 230. It can be seen that the first earth bearing race 224a and first output bearing race 234a form a first raceway 240a.

As shown most clearly Figure 8, and also shown in Figure 5, when the removable cap 100 is in-situ in the recess 260, the output bearing race 234a and cap bearing race 120 form a continuous output bearing race. By continuous, it is understood that, although a gap may be present due to a break at the join between the output bearing race 234a and cap bearing race 120, the gap is not detrimental to the performance of the continuous output bearing race and/or raceways. In other words, a bearing may run smoothly over the gap or join between the output bearing race 234a and cap bearing race 120.

When the removable cap 100 is in-situ, balls bearings 250 may be spaced circumferentially around the bearing race extending between the earth bearing race 224 and continuous output bearing race. The ball bearings 250 are retained between the earth bearing race 224 and continuous output bearing race by the removable cap 100, in particular, when the removable cap 100 is held or radially retained in position.

When the rotary actuator assembly is fully assembled, the output structure 280 is present. However, it is to be appreciated that the output structure 280 need not be present for the continuous output bearing race to be formed. As explained above, the output structure 280, in particular the locking features or splines 282 thereof, act to further retain the removable cap 100 in place, thereby further retaining the ball bearings in the raceways. In some examples, means other than splines 282 may be used to couple the output structure 280 and output annulus 230. In such an example, the output structure 280 still retains the removable cap 100 in place.

Conversely, when the removable cap 100 is not in-situ, ball bearings 250 may be removed from the raceways. It is to be understood that the removable cap 100 may be removed from the recess 260 such that the continuous output bearing race is no longer formed, thus providing access to the ball bearings 250 through the openings 262a, 262b. By access, it is meant that the raceways are accessible such that ball bearings 250 may be removed. Additionally, or alternatively, by removing the removable cap 100 from the recess 260, access is provided such that ball bearings 250 may be inserted through the opening so as to provide ball bearings into the raceway. The removable cap 100 may be located within the recess 260 and fastened so as to retain the added ball bearings 250 between the earth bearing race 224a and continuous output bearing race. The output structure 280 may then be attached to further secure the removable cap 100 in place.

As briefly discussed above, and most clearly shown in Figure 8, the removable cap 100 may be configured so as to lie flush in the recess 260. In the present example, each of the inner face 112, the outer face 114, and the cap bearing races 120 are curved. In the present example, the curvature of the inner face 112, the outer face 114 and the cap bearing races 120 match the curvature of the floor of the recess 260, the outer surface of the output annulus 230 on which the exterior splines 232a are located, and the output bearing race 234a, respectively. In some examples, only the cap bearing races 120 may be suitably curved to match the curvature of the output bearing race 234a. In some examples, the inner face 112 and/or the outer face 114 and/or the cap bearing races 120 may be suitably curved.

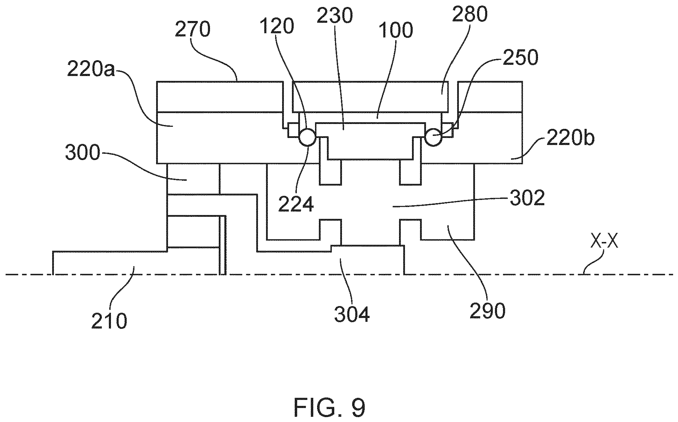

Figure 9 shows a schematic cross-sectional view through part of a gearing arrangement of a rotary mechanism assembly according to an example of the disclosure. It will be understood that only the part of the gearing arrangement above the longitudinal rotation axis X-X is shown and that a full section through the gearing arrangement shown would include a mirror image of the parts shown provided below the axis X-X. The gearing arrangement in the example shown comprises an epicyclic stage 300 and a planetary stage 302. In operation, the earth structure 270 and earth annulus 220a are fixed. The input shaft is rotated so as to drive the epicyclic gearing 300. The epicyclic gearing 300 engages with the earth annulus 220a. Since the earth structure 270 and earth annulus 220a are fixed, a carrier 304 connected to the epicyclic gearing 300 is driven. This in turn drives the planetary stage 302. Rotation of the planetary stage 302 drives rotation of the output annulus 230, which, due to the fixed relationship with the output structure 280 will rotate the output structure 280.

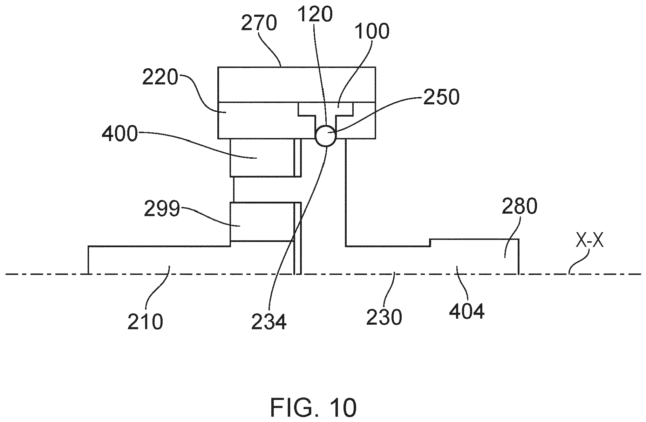

Figure 10 shows a schematic cross-sectional view through part of another gearing arrangement of a rotary mechanism assembly according to an example of the disclosure.. It will be understood that only the part of the gearing arrangement above the longitudinal rotation axis X-X is shown and that a full section through the gearing arrangement shown would include a mirror image of the parts shown provided below the axis X-X. The gearing arrangement in the example shown comprises an epicyclic planet gear 400. In operation, the earth structure 270 and earth annulus 220a are fixed. The input shaft is rotated so as to drive the epicyclic planet gear 400. Since the earth structure 270 and earth annulus 220a are fixed, a carrier / output 404 connected to the epicyclic gearing 300 is driven.

As discussed above, the opening or openings may be formed through the earth annulus. In such examples, the earth bearing race is radially outboard of the output bearing race. Figure 10 shows a schematic cross-sectional side view of a rotary mechanism assembly wherein the opening is formed in an earth annulus 220.

In some examples, the assembly of the rotary mechanism assembly may comprise inserting bearings into a raceway via an opening. In the present examples, bearings 250 may be inserted through openings 262a, 262b into the raceways 240a, 240b. In some examples, the removable cap may be positioned to close the opening. In the present example, the removable cap 100 is received by the recess 260, closing the openings 262a, 262b. In some examples, the removable cap may be held in place by a connector such as fastening means. In the present example, the screw 132 is passed through hole 130 and secured to the output annulus 230. In some examples, an annular component which extends at least partially around the annulus may be coupled to the annulus comprising the opening. In some examples, the annular component may be slid onto the annulus comprising the opening. In the present example, the output structure 280 is coupled by sliding the output structure 280 onto the output annulus 230. In some examples, locking features on the annular components engage with complementary locking features on the annulus comprising the opening. In the present examples, splines 222a, 222b engage splines 282. In the present example, splines 282 contact the removable cap 100 so as to radially retain it over the openings 262a, 262b.

In some examples, the disassembly of the rotary mechanism assembly may comprise decoupling the annular component from the annulus comprising the opening. In some examples, the annular component is decoupled by sliding the annular component off the annulus comprising the opening. In the present example, the output structure 280 is decoupled by sliding it off the output annulus 230. In some example, the fastening means are released such that the removable cap is no longer held in place. In the present example, the screw 132 loosened so as to release the removable cap. In some examples, the removable cap is removed such that access is provided to the bearings via the opening. In some examples, bearings can be removed and replaced.

While the disclosure has been described in detail in connection with only a limited number of examples, it should be readily understood that the disclosure is not limited to such disclosed examples. Rather, the disclosure can be modified to incorporate any number of variations, alterations, substitutions or equivalent arrangements not heretofore described, but which are commensurate with the scope of disclosure. Additionally, while various examples of the disclosure have been described, it is to be understood that aspects of the disclosure may include only some of the described examples. Accordingly, the disclosure is not to be seen as limited by the foregoing description, but is only limited by the scope of the appended claims.

## Claims

1. A rotary mechanism comprising:
an earth annulus;
an output annulus;
a radially inner bearing race formed on or by one of the earth annulus and the output annulus;
a radially outer bearing race partially formed on or by the other of the earth annulus and the output annulus;
an opening in the other of the earth annulus and the output annulus; and
a removable cap configured to be received by the other of the earth annulus and the output annulus to form a raceway with the radially inner bearing race and the radially outer bearing race and to close the opening, the raceway extending circumferentially and between the earth annulus and the output annulus,
wherein the earth annulus is rotatable relative to the output annulus,
wherein a plurality of bearings is received in the raceway,
wherein the plurality of bearings is insertable into and/or removable from the raceway via the opening when the removable cap is removed,
wherein the removable cap is configured to be radially retained by an annular component extending at least partially around the other of the earth annulus and the output annulus.

2. A rotary mechanism as claimed in claim 1, wherein the other of the earth annulus and the output annulus comprises a recess extending radially inwardly from a radially outer surface thereof; and
wherein the recess is configured to receive the removable cap.

3. A rotary mechanism as claimed in claim 1 or 2, comprising a removable connector connecting the removable cap to the other of the earth annulus and the output annulus.

4. A rotary mechanism as claimed in any preceding claim, wherein the removable cap comprises a cap bearing race; and
when the removable cap is received by the other of the earth annulus and the output annulus, the cap bearing race, the radially inner bearing race and the radially outer bearing race form the raceway.

5. A rotary mechanism as claimed in claim 4, wherein, when the removable cap is received by the other of the earth annulus and the output annulus, the raceway extends continuously.

6. A rotary mechanism as claimed in any preceding claim, wherein the other of the earth annulus and output annulus comprises radially outwardly extending locking members configured to engage with complementary radially inwardly extending locking features provided on the annular component.

7. A rotary mechanism as claimed in any preceding claim, comprising one or more further earth annuli axially spaced from the earth annulus, and / or
comprising one or more further output annuli axially spaced from the output annulus.

8. A rotary mechanism as claimed in any preceding claim, wherein the rotary mechanism is one of a rotary actuator, a gear or a gear stage.

9. A rotary mechanism assembly comprising:
the rotary mechanism according to any preceding claim; and
an annular component extending at least partially around the other of the earth annulus and the output annulus and configured to radially retain the removable cap when the removable cap is received by the other of the earth annulus and the output annulus.

10. A rotary mechanism assembly as claimed in claim 9, wherein, when the removable cap is received by the other of the earth annulus and the output annulus and the annular component is in situ , the annular component overlaps the removable cap,
wherein optionally, the annular component fully overlays the removable cap when the removable cap is received by the other of the earth annulus and the output annulus and the annular component is in situ.

11. A rotary mechanism assembly as claimed in claim 9 or 10, wherein, when the removable cap is received by the other of the earth annulus and the output annulus and the annular component is in situ, the annular component retains the removable cap in place,
wherein, optionally, the annular component is in contact with the removable cap when the removable cap is received by the other of the earth annulus and the output annulus and the annular component is in situ.

12. A rotary mechanism assembly as claimed in any of claims 9 to 11, wherein
the annular component comprises radially inwardly extending locking features which engage with radially outwardly extending locking features provided on the other of the earth annulus and output annulus; and
wherein the radially inwardly extending locking features are configured to radially retain the removable cap.

13. A rotary mechanism assembly as claimed in claim 12, wherein, when the removable cap is received by the other of the earth annulus and the output annulus, the removable cap is radially inboard of at least the radially outer ends of the radially outwardly extending locking features.

14. A method for assembling the rotary mechanism assembly of any of claims 9 to 13; the method comprising:
closing the opening with the removable cap; and
installing the annular component on the other of the earth annulus and the output annulus to radially retain the removeable cap.

15. The method of claim 14, wherein the step of installing the annular component on the other of the earth annulus and the output annulus comprises sliding the annular component onto the other of the earth annulus and the output annulus.
